# EUROPÄISCHE PATENTSCHRIFT

(11) **EP 2 723 564 B1**
(45) Veröffentlichungstag und Bekanntmachung des Hinweises auf die Patenterteilung: **26.02.2020**
(21) Anmeldenummer: 12727336.5
(22) Anmeldetag: 31.05.2012
(51) Int. Cl.: B32B 23/00

(54) **FASERERZEUGNIS FÜR VERPACKUNGEN**
FIBROUS PRODUCT FOR PACKAGING
PRODUIT À BASE DE FIBRES POUR EMBALLAGES

(30) Priorität: 24.06.2011 DE 102011105761
(43) Veröffentlichungstag der Anmeldung: 30.04.2014
(60) Teilanmeldung: 16202228.9
(73) Patentinhaber: Smurfit Kappa Hoya Papier und Karton GmbH, 27318 Hoya (DE)
(72) Erfinder: BUSCHMANN, Armin, 27324 Hassel (DE); CADONAU, Fulvio, 27333 Bücken (DE); HONSBROK, Ralf, 27333 Bücken (DE); RICHTER, Detlev, 27321 Morsum (DE); TRUPPNER, Olaf, 27333 Bücken (DE)
(74) Vertreter: Cohausz & Florack
(86) Internationale Anmeldenummer: PCT/EP2012/060292
(87) Internationale Veröffentlichungsnummer: WO 2012/175309

(56) Entgegenhaltungen:
- DE-A1-102006 034 602
- US-A1- 2004 087 231
- US-A1- 2006 029 771

## Beschreibung

Die Erfindung betrifft ein Fasererzeugnis für Verpackungen, insbesondere Lebensmittelverpackungen, mit mindestens einer ersten Faserschicht. Darüber hinaus betrifft die Erfindung ein Verfahren zum Herstellen eines Fasererzeugnisses, eine Vorrichtung zum Herstellen eines Fasererzeugnisses und eine Verpackung umfassend ein Fasererzeugnis.

In der heutigen Zeit wird eine Vielzahl von Lebensmittelverpackungen, aber auch anderen Verpackungen, aus Fasererzeugnissen, wie Pappe, Karton und/oder Papier, hergestellt. Fasererzeugnisse werden jedoch nicht nur als Verpackungen eingesetzt, sondern haben einen breiten Anwendungsbereich. Beispielhafte andere Produkte aus Fasererzeugnissen sind Pappteller, Pappbecher und dergleichen. Fasererzeugnisse weisen mindestens eine Faserschicht auf.

Bei den Fasern einer Faserschicht kann es sich um Zellstofffasern bzw. Frischfasern, Altpapierfasern bzw. Recyclingfasern oder einem Gemisch aus beiden Faserarten handeln. Problematisch bei der Nutzung von Recyclingfasern ist der hohe Anteil von Zeitungspapier im Altpapier, wobei Zeitungspapier in der Regel mit mineralölhaltigen Farben bedruckt wird. Zwar werden die Recyclingfasern vor einer Wiederverwendung gesäubert und behandelt. Dennoch weisen Fasererzeugnisse aus Recyclingfasern einen nicht zu vermeidenden Anteil von Mineralölstoffen auf. Beispielhafte Fasererzeugnisse weisen eine Konzentration von ca. 100 ppm bis 500 ppm auf.

Insbesondere bei Lebensmittelverpackungen, aber auch bei anderen Produkten aus Fasermaterialien, die beispielsweise mit Lebensmitteln in Kontakt gelangen, ergibt sich das Problem, dass die Mineralölstoffe von der Verpackung in das Lebensmittel migrieren können. Die Aufnahme von Mineralölstoffen, wie "mineral oil saturated hydrocarbons" (MOSH) und/oder "mineral oil aromatic hydrocarbons" (MOAH), durch einen Verzehr des Lebensmittel sollte jedoch vermieden werden, da schon geringste Mengen gesundheitliche Schäden, wie Krebs, hervorrufen können.

Dieses Problem tritt jedoch nicht nur bei Recyclingfasern, sondern auch bei Frischfasern auf. So kann eine Vielzahl von einzelnen Frischfasererzeugnisverpackungen beispielsweise für einen Transport in einer Recyclingfasererzeugnisverpackung angeordnet sein. In diesem Fall können Mineralölstoffe von der Recyclingfasererzeugnisverpackung zunächst in die Frischfasererzeugnisverpackung und dann ins Lebensmittel migrieren. Weitere Ursachen können Abgase von Fahrzeugen, wie Dieselabgase von Lastkraftwagen, oder Druckfarben, mit denen eine entsprechende Verpackung bedruckt wird, sein.

Im Stand der Technik wird zur Lösung des Problems vorgeschlagen, das hergestellte Fasererzeugnis in einem nachfolgenden Verarbeitungsschritt mit einer zusätzlichen Schutzschicht zu versehen. Beispielsweise offenbart die US 5 153 061 A ein Fasererzeugnis mit einer Schutzschicht, wie einer Polymerbeschichtung oder einer Aluminiumschicht. Diese Schutzschicht ist an einer Innenseite der Verpackung angeordnet.

Nachteilig hieran ist zum einen, dass nach der Herstellung des Fasererzeugnisses ein weiterer Verarbeitungsschritt erforderlich ist. Hierdurch erhöht sich der Herstellungsaufwand und entsprechend die Herstellungskostenkosten. Zum anderen ist es zur Verhinderung einer Migration von Mineralölstoffen in ein weiteres Produkt erforderlich, dass eine vollflächige und ausreichend dicke Schutzschicht angebracht wird. Diese kann jedoch leicht zerstört werden, so dass kein ausreichender Schutz gewährleistet werden kann.

Ferner ist aus der US 2004/087231 A1 ein Faserkomplex bekannt, bei dem leitende Verbundfasern mit einer leitenden thermoplastischen Komponente und eine faserbildende Komponente gemischt sind, und die leitende Verbundfaser aus einem thermoplastischen Polymer besteht, welches Ruß enthält.

Der Erfindung liegt daher die Aufgabe zugrunde, ein Fasererzeugnis bereitzustellen, welches in sicherer und einfacher Weise eine Migration von Mineralölstoffen aus dem Fasererzeugnis in ein weiteres Produkt zumindest ausreichend reduziert.

Die Aufgabe wird erfindungsgemäß bei einem Fasererzeugnis gemäß Patentanspruch 1 gelöst.

Das Fasererzeugnis eignet sich als Material für Verpackungen, insbesondere Lebensmittelverpackungen. Das Fasererzeugnis umfasst mindestens eine erste Faserschicht. Die erste Faserschicht ist zumindest teilweise mit einem Filtermaterial zum Binden von Mineralölstoffen durchsetzt.

Im Gegensatz zum Stand der Technik wird erfindungsgemäß eine Reduzierung der Migration von Mineralölstoffen in ein weiteres Produkt nicht durch eine zusätzliche Beschichtung erzielt, sondern durch in die Masse, also in das Innere des Fasererzeugnisses eingebrachtes Filtermaterial.

Das Fasererzeugnis, beispielsweise ein Papier-, Pappe,- und/oder Kartonerzeugnis, umfasst mindestens eine erste Faserschicht. Eine Faserschicht weist insbesondere geeignete Fasern auf.

Erfindungsgemäß ist erkannt worden, dass eine Durchsetzung der Faserschicht mit einem Filtermaterial, welches zumindest Mineralölstoffe binden bzw. absorbieren kann, in einfacher Weise eine signifikante Reduzierung der Migration von Mineralölstoffen in ein mit dem Fasererzeugnis zumindest zeitweise in Kontakt stehendes Produkt mit sich bringt. Durchsetzung bedeutet insbesondere, dass die (ohnehin) vorgesehene Faserschicht neben den Fasern das Filtermaterial aufweist. Mit anderen Worten ist das Filtermaterial innerhalb der mindestens einen Faserschicht bzw. innerhalb des Fasererzeugnisses angeordnet. Hierbei kann schon eine teilweise bzw. ungleichmäßige Durchsetzung zu einer ausreichenden Migrationshemmung führen.

Eine zusätzliche Schutzschicht sowie ein zusätzlicher Beschichtungsschritt nach Herstellung des Fasererzeugnisses können entfallen.

Bei dem erfindungsgemäßen Fasererzeugnis ist durch eine (teilweise) Durchsetzung einer Faserschicht mit Filtermaterial die Migration auf einen Wert von zumindest kleiner 0,6 mg/kg verringert. Vorzugsweise kann ein Fasererzeugnis bereitgestellt werden, bei dem die Migration auf einen Wert von zumindest kleiner 0,1 mg/kg verringert ist. Die Messwerte können mit verschiedenen Messverfahren festgestellt werden. Beispielsweise durch eine chemische Analyse. Damit die Menge der migrierten Stoffe ermittelt werden kann, können Simulantien eingesetzt werden. Sie weisen vergleichbare Eigenschaften auf, wie das zu verpackende Produkt. Die Simulantien werden nach einer festgelegten Einwirkzeit (10 Tage) unter genau definierten Bedingungen, wie Temperatur (40°C), auf migrierte Bestandteile überprüft.

Gemäß einer ersten Ausführungsform des erfindungsgemäßen Fasererzeugnisses kann die erste Faserschicht Recyclingfasern aufweisen. Alternativ oder zusätzlich kann die erste Faserschicht Frischfasern aufweisen. Recyclingfasern, auch Altpapierfasern genannt, können aus Altpapier hergestellt sein. Es versteht sich, dass die Recyclingfasern gereinigt sein können. Die Reinigung der Recyclingfasern reduziert zwar den Mineralölgehalt, jedoch nicht ausreichend. Erst die erfindungsgemäße Beifügung von Filtermaterial gewährleistet, dass die Migration von Mineralölstoffen ausreichend, insbesondere unter 0,1 mg/kg reduziert werden kann.

Frischfasern sind beispielsweise Fasern aus Zellstoff. Je nach Anwendung des Fasererzeugnisses und/oder in Abhängigkeit gewünschter Eigenschaften der mindestens einen Faserschicht kann die erste Faserschicht ausschließlich Frischfasern, ausschließlich Recyclingfasern oder beide Arten von Fasern mit einem vorgebbaren Verhältnis umfassen.

Gemäß einer weiteren bevorzugten Ausführungsform kann das Filtermaterial eine Aktivkohle sein. Es ist erkannt worden, dass sich Aktivkohle besonders gut als Filtermaterial eignet.

Beispielsweise kann die Aktivkohle in Partikelform zur Verfügung gestellt werden. Der (durchschnittliche) Durchmesser der Aktivkohlepartikel liegt im Bereich zwischen 1 µm und 100 µm. Aktivkohlepartikel können eine Faserschicht leicht durchsetzen. Gleichzeitig kann (ggf. durch Zusatzstoffe) ein ungewünschter Austritt der Aktivkohle aus einer Faserschicht verhindert werden. Ferner kann Aktivkohle Mineralölstoffe nahezu dauerhaft, zumindest während der Lebensdauer eines Fasererzeugnisses, binden. Es versteht sich, dass es sich bei der Aktivkohle insbesondere um eine für Lebensmittel geeignete Aktivkohle handeln kann.

Wie bereits beschrieben wurde, kann grundsätzlich eine Vielzahl an Filtermaterialien eingesetzt werden, solange das Filtermaterial Mineralölstoffe binden kann. Bevorzugt kann Aktivkohle eingesetzt werden. Es ist erkannt worden, dass besonders geringe Migrationswerte erzielt werden können, wenn die Aktivkohle zumindest teilweise aus einem pflanzlichen Material gebildet ist. Vorzugsweise kann das pflanzliche Material Kokosnussschalen umfassen. Eine derartige Aktivkohle besitzt besonders gute Mineralölabsorbierungseigenschaften.

Darüber hinaus kann gemäß einer weiteren Ausführungsform des erfindungsgemäßen Fasererzeugnisses mindestens eine weitere mit der ersten Faserschicht verbundene Schicht vorgesehen sein. Insbesondere Pappe- oder Kartonerzeugnisse weisen in der Regel eine Mehrzahl an Schichten auf. Eine Mehrzahl an Schichten kann die Stabilität und Tragfähigkeit des Fasererzeugnisses erhöhen. Beispielsweise kann die mindestens eine weitere Schicht eine weitere Faserschicht sein. Beispielsweise können Pappe- oder Kartonerzeugnisse drei oder mehr Faserschichten aufweisen. Bevorzugt können die äußeren Faserschichten hinsichtlich Festigkeit optimiert sein, während innenliegende Faserschichten hinsichtlich Volumen optimiert sein können.

Ferner kann die mindestens eine weitere Schicht eine Schutzschicht sein. Eine Schutzschicht insbesondere in Form einer Beschichtung ist eine Schicht, die eine Barriere bildet, um die Migration von ungewünschten Stoffen in ein angrenzendes Produkt zumindest zu reduzieren. Beispielsweise kann eine Kunststoffbeschichtung und/oder eine Metallbeschichtung vorgesehen sein. Durch eine zusätzliche Schutzschicht kann die Sicherheit weiter verbessert werden. Auch wenn grundsätzlich die Einbringung von Filtermaterial in das Fasererzeugnis ausreicht, um eine Migration von Mineralölstoffen in ein weiteres Produkt nahezu vollständig zu verhindern, kann vorteilhafterweise eine zusätzliche Schutzschicht vorgesehen sein. Wenn zum Beispiel ein Produktionsfehler auftritt und beispielsweise das Fasererzeugnis nicht mit Filtermaterial durchsetzt ist, kann das Fasererzeugnis aufgrund der zusätzlichen Schutzschicht weiterhin bedenkenlos verwendet werden.

Grundsätzlich kann die Schutzschicht an einer beliebigen Position des Fasererzeugnisses angeordnet sein. Eine einfache und besonders effiziente Ausführungsform liegt dann vor, wenn mindestens eine Deckschicht des Fasererzeugnisses eine Schutzschicht ist. Insbesondere kann eine untere Deckschicht, also die mit dem zu verpackenden Produkt in Kontakt tretende Schicht, als Schutzschicht gebildet sein. Wie bereits beschrieben wurde, kann die Schutzschicht geeignete Kunststoffmaterialien und/oder metallische Materialien umfassen, welche die Menge an migrierenden Mineralölstoffen aus dem Fasererzeugnis zumindest reduziert. Vorteilhafterweise kann die Schutzschicht zusätzlich derart gebildet sein, dass auch ein Austritt von Filtermaterial aus einer Faserschicht verhindert werden kann.

Die obere Deckschicht, die insbesondere für ein Bedrucken geeignet ist, kann alternativ oder zusätzlich als Schutzschicht gebildet sein. Die Migration von Mineralölstoffen in das Fasererzeugnis zum Beispiel von einem anderen Fasererzeugnis kann zumindest reduziert werden. Vorteilhafterweise kann mindestens eine Innenschicht des Fasererzeugnisses eine Faserschicht sein. Beispielsweise kann zwischen einer unteren Deckschicht, wie einer geeigneten Schutzbeschichtung, und einer oberen Deckschicht, wie einer geeigneten Schutzbeschichtung, eine Mehrzahl an Faserschichten vorgesehen sein. Ein Fasererzeugnis mit verbesserten Migrationseigenschaften und einer ausreichenden Stabilität kann zur Verfügung gestellt werden.

Ein weiterer Aspekt der Erfindung ist ein Verfahren zum Herstellen eines Fasererzeugnisses, insbesondere eines zuvor beschriebenen Fasererzeugnisses. Das Verfahren umfasst die Schritte:
- Erzeugen mindestens einer ersten Faserschicht aus einer Fasersuspension, und
- Hinzufügen eines Filtermaterials zum Binden von Mineralölstoffen, derart, dass die erste Faserschicht zumindest teilweise von dem Filtermaterial durchsetzt wird.

Im Gegensatz zum Stand der Technik wird nicht nachträglich auf das hergestellte und getrocknete Fasererzeugnis eine Beschichtung zum Schutz vor einer ungewünschten Migration von Mineralölstoffen aufgebracht, sondern ein Filtermaterial wird derart zugeführt, dass zumindest die eine Faserschicht zumindest teilweise durchsetzt wird.

Zum Erzeugen einer Faserschicht kann eine Fasersuspension bereitgestellt werden. Eine Fasersuspension weist zumindest Fasern, wie Recycling- und/oder Frischfasern, und Wasser auf. Es versteht sich, dass weitere Hilfs- und/oder Füllstoffe beigemengt sein können. Die genaue Zusammensetzung der Fasersuspension kann insbesondere von den gewünschten Eigenschaften der Faserschicht abhängen.

Es ist erkannt worden, dass während des Herstellens des Fasererzeugnisses, also während der Nassphase, Filtermaterial hinzugefügt werden kann, so dass sich das Filtermaterial zumindest teilweise innerhalb der mindestens einen Faserschicht anlagern bzw. ablagern kann.

In einfacher Weise kann ein Fasererzeugnis geschaffen werden, bei dem eine Migration von Mineralölstoffen in ein weiteres Produkt zumindest deutlich reduziert werden kann, ohne dass eine zusätzliche Beschichtung des Fasererzeugnisses erfolgen muss.

Grundsätzlich kann das Filtermaterial zu beliebigen Zeitpunkten hinzugefügt werden, solange eine zumindest teilweise Durchsetzung mindestens einer Faserschicht mit dem Filtermaterial erfolgen kann. Gemäß einer ersten Ausführungsform des erfindungsgemäßen Verfahrens kann das Filtermaterial der Fasersuspension hinzugefügt werden. Das Filtermaterial kann mit einem vorgebbaren Verhältnis der Fasersuspension beigemengt und mit dieser vermischt werden. In einfacher Weise kann erreicht werden, dass die aus dieser Fasersuspension erzeugte Faserschicht mit Filtermaterial (nahezu gleichmäßig) durchsetzt ist.

Alternativ oder zusätzlich kann das Filtermaterial auf die erzeugte erste Faserschicht aufgebracht werden. Es versteht sich, dass die Aufbringung des Filtermaterials auf die erzeugte erste Faserschicht während der Nassphase erfolgen kann. Es ist erkannt worden, dass in diesem Stadium das Filtermaterial in die Faserschicht leicht eindringen und sich dort ablagern kann. Hierbei dringt das Filtermaterial im Wesentlichen vorzugsweise zu 50%, insbesondere zu 70 % ein. Es kann verhindert werden, dass das Filtermaterial aus der Faserschicht wieder austritt.

Wie bereits beschrieben wurde, kann das Filtermaterial vorzugsweise während der Nassphase hinzugefügt werden. Bevorzugt wird dieser Prozess bei einer Temperatur von 30°C bis 50°C, insbesondere bei 35°C bis 45°C durchgeführt. Gerade in diesem Temperaturbereich verhält sich die Faserschicht derart, dass ein Filtermaterial leicht eindringen und sich dort ablagern kann. Insbesondere ist erkannt worden, dass das Filtermaterial in diesem Temperaturbereich besser in der Faserschicht haften bleibt.

In einer bevorzugten Ausführungsform des Verfahrens kann auf die erzeugte erste Faserschicht ein Bindemittel aufgebracht werden. Ein Bindemittel dient insbesondere dazu, weitere Schichten mit der ersten Faserschicht zu verbinden, beispielsweise miteinander zu verkleben. Das Bindemittel kann vorzugsweise das Filtermaterial umfassen. Das Filtermaterial und das Bindemittel können ein Gemisch mit einem vorgebbaren Verhältnis bilden, so dass das Filtermaterial und das Bindemittel gemeinsam aufgebracht werden können. Eine gemeinsame Aufbringung hat den Vorteil, dass das Bindemittel auch das Filtermaterial bindet und einen Austritt des Filtermaterials aus der mindestens einen Faserschicht verhindert. Darüber hinaus ist in der Regel ohnehin ein Aufbringen eines Bindemittels vorgesehen, so dass in einfacher Weise ein herkömmliches Verfahren modifiziert werden kann.

Das Bindemittel kann gemäß einer Ausführungsform auf die erzeugte erste Faserschicht aufgesprüht werden. Dies erlaubt ein möglichst gleichmäßiges und exaktes Aufbringen des Bindemittels und des Filtermaterials auf die Oberfläche der erzeugten ersten Faserschicht. Vorzugsweise kann als Bindemittel Stärke eingesetzt werden. Es versteht sich, dass auch andere Bindemittel eingesetzt werden können.

Wie bereits beschrieben wurde, kann das Filtermaterial vorzugsweise eine Aktivkohle sein. Ferner können unterschiedliche Filtermaterialien gleichzeitig eingesetzt werden.

Gemäß einer weiteren Ausführungsform des Verfahrens kann auf die mit dem Bindemittel versehene erste Faserschicht mindestens eine weitere Schicht aufgebracht werden. Die erste Faserschicht kann mit der weiteren Schicht verpresst werden. Durch das Bindemittel, welches das Filtermaterial umfassen kann, können die beiden Schichten (dauerhaft) verbunden werden.

Die weitere Schicht kann insbesondere eine weitere Faserschicht oder eine Schutzschicht sein. Für den Fall, dass eine weitere Faserschicht vorgesehen ist, kann das Filtermaterial auch die weitere Faserschicht zumindest teilweise durchsetzen. Dies kann insbesondere durch den Pressvorgang unterstützt werden. Durch den Pressvorgang kann auf das Filtermaterial eine Kraft einwirken, derart, dass das Filtermaterial, wie Aktivkohlepartikel, in die weitere Schicht gepresst wird und sich dort ablagert.

Es versteht sich, dass die weitere Faserschicht entsprechend der ersten Faserschicht erzeugt werden kann. Ferner erfolgt das Verbinden der Faserschichten vorzugsweise während der Nassphase.

Ein weiterer Aspekt der Erfindung ist eine Vorrichtung zum Herstellen eines Fasererzeugnisses, insbesondere eines zuvor beschriebenen Fasererzeugnisses. Die Vorrichtung umfasst eine erste Zuführeinrichtung zum Aufbringen einer Fasersuspension auf eine Entwässerungseinrichtung. Die Entwässerungseinrichtung ist zum Erzeugen einer ersten Faserschicht vorgesehen. Die Vorrichtung umfasst mindestens eine weitere Zuführeinrichtung zum Aufbringen von zumindest einem Filtermaterial auf die erste Faserschicht, derart, dass die erzeugte erste Faserschicht von dem Filtermaterial zumindest teilweise durchsetzt wird.

Die erfindungsgemäße Vorrichtung ermöglicht es in einfacher Weise, ein Filtermaterial in die Masse des Fasererzeugnisses einzubringen. Die Vorrichtung ist insbesondere zur Durchführung des zuvor beschriebenen Verfahrens geeignet.

Die erste Zuführeinrichtung ist eingerichtet, um eine erste Fasersuspension auf eine Entwässerungseinrichtung aufzubringen. Beispielsweise kann die erste Zuführeinrichtung einen Behälter zur Aufnahme der Suspension und eine Auslasseinrichtung, wie eine Düse oder dergleichen, aufweisen. Vorzugsweise kann die Zuführeinrichtung einen dünnen und möglichst gleichförmigen Strahl formen. Eine gleichmäßige Faserschicht kann erzeugt werden.

Die Entwässerungseinrichtung kann beispielsweise ein Förderband sein, wobei das Förderband Öffnungen aufweisen kann, so dass zwar Wasser ablaufen kann, die Fasern jedoch nicht. Beispielsweise kann ein siebförmiges Förderband vorgesehen sein.

Mindestens eine weitere Zuführeinrichtung, beispielsweise eine Sprühvorrichtung, kann vorgesehen sein. Das Förderband mit der erzeugten Faserschicht kann an der weiteren Zuführeinrichtung vorbeiführen. Dies hat den Vorteil, dass sich bereits eine Faserschicht gebildet hat, wenn das Filtermaterial aufgebracht wird. Die Faserschicht ist jedoch nicht ausgetrocknet, so dass in einfacher Weise Filtermaterial in die erzeugte Faserschicht eingebracht, die Faserschicht also von dem Filtermaterial zumindest teilweise durchsetzt werden kann. Die weitere Zuführeinrichtung kann vorzugsweise eingerichtet sein, um ein Gemisch umfassend Filtermaterial und Bindemittel aufzubringen.

Gemäß einer Ausführungsform der erfindungsgemäßen Vorrichtung kann mindestens eine Presseinrichtung zum Verbinden von mindestens einer weiteren Schicht mit der ersten Faserschicht vorgesehen sein. Die Presseinrichtung, beispielsweise eine Walzeinrichtung mit einer oder mehreren Walze/n, kann insbesondere eingerichtet sein, um zwei zu verbindende Faserschichten miteinander zu verpressen. Beispielsweise kann eine Gautschpresse oder eine ähnliche Einrichtung vorgesehen sein. Es versteht sich, dass auch drei oder mehr Schichten, insbesondere Faser- und/oder Schutzschichten gleichzeitig in einer Walzeinrichtung verpresst werden können.

Ein noch weiterer Aspekt der Erfindung ist eine Verpackung, insbesondere eine Lebensmittelverpackung, welche das zuvor beschriebene Fasererzeugnis umfasst. Insbesondere kann die Verpackung zumindest teilweise, bevorzugt vollständig aus einem zuvor beschriebenen Fasererzeugnis gebildet sein. Eine Migration von Mineralölstoffen in das verpackte Material, wie ein Lebensmittel, kann zumindest signifikant reduziert werden.

Es gibt nun eine Vielzahl von Möglichkeiten, das erfindungsgemäße Fasererzeugnis, das erfindungsgemäße Verfahren zum Herstellen eines Fasererzeugnisses, die erfindungsgemäße Vorrichtung zum Herstellen eines Fasererzeugnisses und die erfindungsgemäße Verpackung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Fasererzeugnisses gemäß der vorliegenden Erfindung;
- Fig. 2: eine schematische Ansicht eines weiteren Ausführungsbeispiels eines Fasererzeugnisses gemäß der vorliegenden Erfindung;
- Fig. 3: eine schematische Ansicht eines weiteren Ausführungsbeispiels eines Fasererzeugnisses gemäß der vorliegenden Erfindung;
- Fig. 4: eine schematische Ansicht eines weiteren Ausführungsbeispiels eines Fasererzeugnisses gemäß der vorliegenden Erfindung;
- Fig. 5: eine schematische Ansicht eines Ausführungsbeispiels einer Vorrichtung zum Herstellen eines Fasererzeugnisses; und
- Fig. 6: ein Flussdiagramm eines Ausführungsbeispiels eines Verfahrens zum Herstellen eines Fasererzeugnisses.

Nachfolgend werden gleiche Bezugszeichen für gleiche Elemente verwendet.

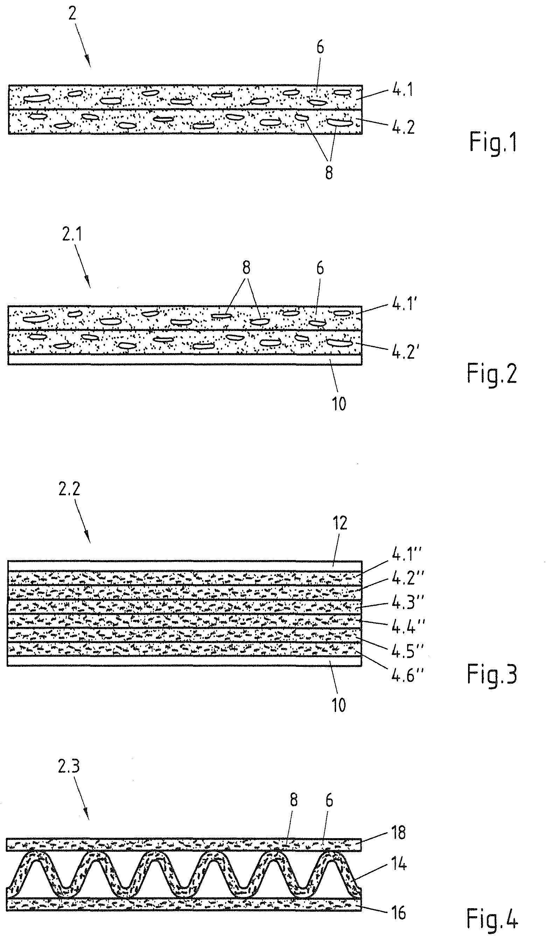

Figur 1 zeigt eine vereinfachte Ansicht eines ersten Ausführungsbeispiels eines Fasererzeugnisses 2 gemäß der vorliegenden Erfindung. Das dargestellte Fasererzeugnis 2, insbesondere ein Papier-, Pappe- und/oder Kartonerzeugnis, umfasst zwei Schichten 4.1 und 4.2. Im vorliegenden Ausführungsbeispiel sind die Schichten 4.1 und 4.2 als eine erste Faserschicht 4.1 und eine weitere Faserschicht 4.2 gebildet.

Eine Faserschicht 4.1, 4.2 umfasst Fasern 8. Beispielsweise kann eine Faserschicht 4.1, 4.2 Recyclingfasern 8 und/oder Frischfasern 8 umfassen. Frischfasern 8, auch Primärfasern genannt, werden erstmals zur Produktion eines Fasererzeugnisses 2 eingesetzt. Beispielhafte Faserstoffe für Frischfasern sind Holzschliff, Halbzellstoff oder Zellstoff. Recyclingfasern 8, auch Sekundärfasern genannt, können insbesondere aus Altpapier gewonnen werden.

Darüber hinaus weist das dargestellte Fasererzeugnis 2 ein Filtermaterial 6 zum Binden von Mineralölstoffen auf. Das Filtermaterial 6, vorzugsweise eine Aktivkohle 6, kann insbesondere in mindestens einer Faserschicht 4.1, 4.2 vorgesehen sein und diese zumindest teilweise durchsetzen. Das Filtermaterial 6 ist insbesondere dazu geeignet, Mineralölstoffe zu absorbieren. Vorzugsweise ist das Filtermaterial 6 dazu geeignet, durch die Bindung von Mineralölstoffen die Migration dieser Stoffe zu reduzieren.

Beispielsweise kann ein Fasererzeugnis 2 umfassend ein Filtermaterial 6 bereitgestellt werden, welches einen Migrationswert von zumindest kleiner als 0,6 mg/kg, vorzugsweise von zumindest kleiner als 0,1 mg/kg aufweist. Der Migrationswert ist die Menge (in mg), welche innerhalb von 10 Tagen bei 40°C in ein Kg Lebensmittel migriert.

Insbesondere können mit dem Filtermaterial 6 Mineralölstoffe, wie "mineral oil saturated hydrocarbons" (MOSH) und/oder "mineral oil aromatic hydrocarbons" (MOAH) gebunden werden.

Wie bereits beschrieben wurde, kann als Filtermaterial 6 bevorzugt Aktivkohle 6 eingesetzt werden. Besonders geeignet ist aus pflanzlichen Rohstoffen, wie Kokosnussschalen, gebildete Aktivkohle 6.

In einem bevorzugten Ausführungsbeispiel kann die Aktivkohle 6 in Granulatform bereitgestellt sein. Die Mahlfeinheit kann zu ca. 80 % beispielsweise ca. 45 µm betragen. Der Wassergehalt bei Abpackung der Aktivkohle 6 kann vorzugsweise maximal 10 %, insbesondere 7 %, sein. Der Aschegehalt kann maximal 3 %, vorzugsweise 1 %, betragen. Säuerliche Anteile der Aktivkohle können maximal 3 % betragen, vorzugsweise 0,8 %. Darüber hinaus kann der wasserlösliche Anteil maximal 0,2 % sein, insbesondere 0,05 %. Der pH-Wert der Aktivkohle 6 kann zwischen 5 bis 7 liegen und vorzugsweise 6,5 sein. Ferner kann die minimale Jodzahl 900 mg/g, insbesondere 950 mg/g sein. Die spezifische Oberfläche (BET) der Aktivkohlepartikel kann ca. 1000 m²/g sein.

Das Filtermaterial 6 kann (nahezu) gleichmäßig in den beiden Faserschichten 4.1, 4.2 verteilt sein. Grundsätzlich ist auch eine teilweise Durchsetzung mindestens einer Faserschicht 4.1, 4.2 ausreichend. Um zu verhindern, dass das Filtermaterial aus dem Fasererzeugnis 2 austreten kann, kann bevorzugt der Anteil des Filtermaterials 6 in einem Innenbereich des Fasererzeugnisses 2 größer als an den Außenflächen sein.

Es versteht sich, dass ein Fasererzeugnis 2 weitere Stoffe umfassen kann. Beispielsweise können Leim- und Imprägnierungsstoffe, wie tierische Leime, Harze, etc., Füllstoffe, wie Kaolin, Talkum, etc., und/oder Hilfsstoffe, wie Farbstoffe, Netzmittel, etc., vorgesehen sein.

Figur 2 zeigt eine weitere vereinfachte Ansicht eines weiteren Ausführungsbeispiels eines Fasererzeugnisses 2.1 gemäß der vorliegenden Erfindung. Im Vergleich zum Fasererzeugnis 2 gemäß der Figur 1 weist das Fasererzeugnis 2.1 gemäß der Figur 2 zwei Faserschichten 4.1' und 4.2' und eine Schutzschicht 10 auf.

Die Schutzschicht 10 bildet insbesondere eine Deckschicht bzw. Decklage. Vorzugsweise kann die Schutzschicht 10 zumindest die innere Deckschicht, also die Deckschicht, welche ein aufzunehmendes Medium kontaktiert, bilden. Bei einer Lebensmittelverpackung ist die Schutzschicht 10 demnach an einer Innenseite der Verpackung angeordnet.

Bei der Schutzschicht 10 kann es sich beispielsweise um eine Kunststoffbeschichtung handeln. Alternativ oder zusätzliche können geeignete Metallfolien vorgesehen sein. Eine Schutzschicht 10 kann die Gefahr einer ungewünschten Migration von Mineralölstoffen noch weiter verringern. Darüber hinaus kann die Schutzschicht 10 derart gebildet sein, dass ein Austritt des Filtermaterials 6 verhindert werden kann.

In Figur 3 ist eine weitere vereinfachte Ansicht eines weiteren Ausführungsbeispiels eines Fasererzeugnisses 2.2 dargestellt. Das gezeigte Fasererzeugnis 2.2 weist eine obere Deckschicht 12, eine untere Deckschicht 10 und sechs Innenlagen 4.1" bis 4.6" auf.

Die obere Deckschicht 12 kann die Außenschicht einer Verpackung sein. Die obere Deckschicht 12 kann bedruckbar sein. Ferner kann die Deckschicht 12 als Schutzbeschichtung 12 gebildet sein, um ein Eindringen von Mineralölstoffen in das Fasererzeugnis 2.2 zu verhindern. Die untere Deckschicht 10 kann, wie bereits beschrieben wurde, als Schutzbeschichtung 10 gebildet sein.

Die Schichten 4.1" bis 4.6" können insbesondere als Faserschichten 4.1" bis 4.6" gebildet sein, welche zumindest teilweise mit einem Filtermaterial durchsetzt sein können.

Es versteht sich, dass eine beliebige Anzahl von Faserschichten 4 vorgesehen sein kann. Es versteht sich ferner, dass (sämtliche) Faserschichten 4 unterschiedlich gebildet sein können oder zumindest teilweise gleich gebildet sein können. Beispielsweise können die Faserschichten 4.1" und 4.6" hinsichtlich Stabilität optimiert sein, während die Faserschichten 4.2" bis 4.5" auf Volumen optimiert sein können.

Gemäß anderen Varianten der Erfindung können neun innere Faserschichten 4 mit einer oberen Beschichtung 12 und einer unteren Schutzschicht 10 vorgesehen sein.

Figur 4 zeigt ein weiteres Ausführungsbeispiel eines Fasererzeugnisses 2.3 gemäß der vorliegenden Erfindung. Bei dem dargestellten Ausführungsbeispiel handelt es sich insbesondere um einlagige Wellpappe 2.3 mit einer wellenförmigen Mittelschicht 14 und einer oberen Deckschicht 18 und einer unteren Deckschicht 16. Diese Faserschichten 14 bis 18 können zumindest teilweise mit einem Filtermaterial durchsetzt sein. Es versteht sich, dass gemäß anderen Varianten der Erfindung auch zwei- oder mehrlagige Wellpappenerzeugnisse und/oder unterschiedliche Wellenarten, wie B-Welle, C-Welle, F-Welle, etc., vorgesehen sein können.

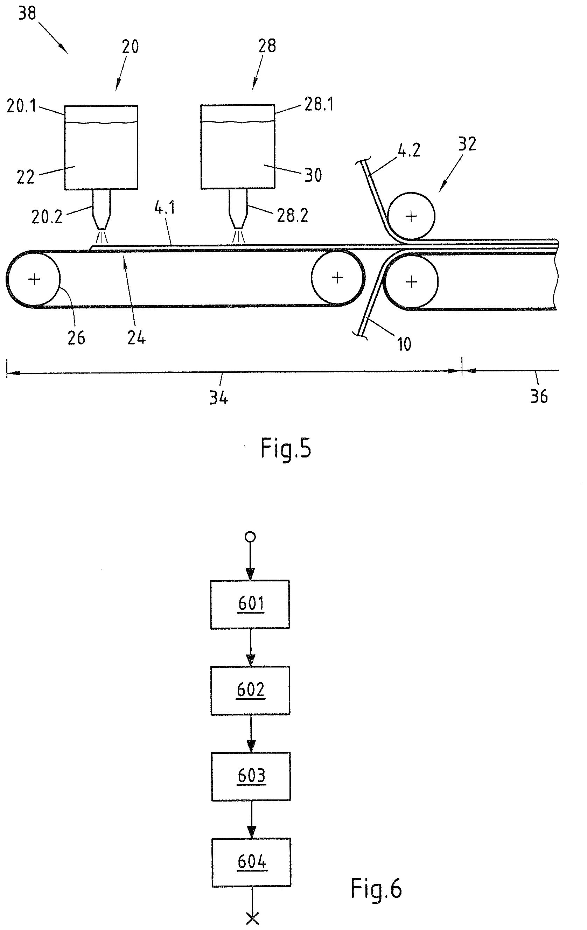

Figur 5 zeigt eine vereinfachte Ansicht eines Ausführungsbeispiels einer Vorrichtung 38 zum Herstellen eines Fasererzeugnisses 2, 2.1, 2.2 oder 2.3. Bei der Vorrichtung 38 kann es sich insbesondere um eine Papier-, Pappe-, oder Kartonmaschine handeln.

Die dargestellte Vorrichtung 38 umfasst eine erste Zuführeinrichtung 20 zum Aufbringen einer Fasersuspension 22 auf eine Entwässerungseinrichtung 24. Die Zuführeinrichtung 20, beispielsweise ein Stoffauflauf, kann einen Vorratsbehälter 20.1 und eine Düseneinrichtung 20.2 umfassen. Beispielsweise kann ein dünner und gleichmäßiger Strahl geformt werden.

Die Entwässerungseinrichtung 24 kann beispielsweise ein Sieb 24 sein, welches mittels Walzen 26 rotieren kann. Die auf das Sieb 24 aufgebrachte Fasersuspension 22 kann zu ca. 99 % aus Wasser und 1 % aus Fasern bestehen. Innerhalb weniger Sekunden kann ein sehr großer Teil des Wassers ablaufen. Die Faserstruktur der ersten Faserschicht 4.1 kann entstehen.

Darüber hinaus ist im vorliegenden Ausführungsbeispiel eine weitere Zuführeinrichtung 28 vorgesehen. Die weitere Zuführeinrichtung 28 kann zumindest dazu eingerichtet sein, das Filtermaterial 6 auf die erste Faserschicht 4.1 aufzubringen. Insbesondere kann die weitere Zuführeinrichtung 28 einen Vorratsbehälter 28.1 und eine Düseneinrichtung 28.2 umfassen. Bevorzugt kann in dem Vorratsbehälter 28.1 ein Bindemittel 30 gespeichert sein, welches das Filtermaterial 6 umfasst. Das Bindemittel 30, beispielsweise Stärke, kann insbesondere vorgesehen sein, um eine zweite Faserschicht 4.2 mit der ersten Faserschicht 4.1 zu verbinden. Das Filtermaterial 6 kann besonders einfach in das Fasererzeugnis 2 eingebracht werden, wenn es zusammen mit dem Bindemittel 30 aufgebracht wird. Vorzugsweise kann das Bindemittel 30 umfassend das Filtermaterial 6 mittels der Düseneinrichtung 28.1 aufgesprüht werden. Es versteht sich, dass auch andere Zuführeinrichtungen vorgesehen sein können.

Wie der Figur 5 ferner entnommen werden kann, umfasst die dargestellte Vorrichtung 38 ferner eine Presseinrichtung 32 in Form einer Walzeinrichtung 32. Die Walzeinrichtung 32 kann insbesondere eine Gautschpresse sein. Vorliegend können durch die Gautschpresse zwei Faserschichten 4.1, 4.2 (unlösbar) miteinander verbunden werden. Ferner kann mit der dargestellten Presseinrichtung 32 gleichzeitig eine weitere Schicht 10, wie eine Schutzschicht 10, angebracht werden. Es versteht sich, dass gemäß anderen Varianten der Erfindung die Schichten 4.2, 10 auch sequentiell angebracht werden können.

Insbesondere versteht es sich, dass gemäß anderen Varianten der Erfindung die Vorrichtung 38 zum Herstellen des Fasererzeugnisses 2 weitere Komponenten umfassen kann, um beispielsweise mehrlagige Fasererzeugnisse 2 herzustellen. Vorzugsweise können Beschichtungseinrichtungen zum Herstellen einer oberen und einer unteren Deckschicht 10, 12 vorgesehen sein. Die Vorrichtung 38 kann in eine Nasspartie 34 und eine anschließende Trockenpartie 36 unterteilt werden. Nach Herstellung des Fasererzeugnisses 2 und insbesondere der Durchsetzung mindestens einer Faserschicht 4.1, 4.2 mit einem Filtermaterial 6 in der Nasspartie 34 kann das hergestellte Fasererzeugnis 2 eine Trocknungseinrichtung durchlaufen.

Die Funktionsweise der Vorrichtung 38 gemäß der Figur 5 wird nachfolgend eingehend mit Hilfe der Figur 6 erläutert. Figur 6 zeigt ein Flussdiagramm eines Ausführungsbeispiels eines Verfahrens zum Herstellen eines Fasererzeugnisses 2 insbesondere mittels der Vorrichtung 38 gemäß Figur 5.

In einem ersten Schritt 601 kann eine Fasersuspension 22 mittels einer ersten Zuführeinrichtung 20 auf eine Entwässerungseinrichtung 24 aufgebracht werden. Durch die Entwässerungseinrichtung 24 kann ein Großteil des Wassers ablaufen. Eine erste Faserschicht 4.1 wird gebildet.

Es versteht sich, dass in einem vorherigen Schritt zunächst die Suspension 22 hergestellt werden kann. Verschiedene Verfahren zur Aufbereitung der Rohstoffe sind bekannt.

In einem nächsten Schritt 602 kann zumindest das Filtermaterial 6, vorzugsweise zusammen mit einem Bindemittel 30, aufgebracht werden. Insbesondere kann mittels einer weiteren Zuführeinrichtung 28 ein entsprechendes Gemisch 30 auf die gebildete erste Faserschicht 4.1 aufgebracht werden. Wie bereits beschrieben wurde, dient das Bindemittel 30 insbesondere als Klebstoff zum Verbinden der ersten Faserschicht 4.1 mit einer weiteren Faserschicht 4.2. Die Filtermaterialpartikel 6 können zumindest teilweise in die erste Faserschicht 4.1 eindringen und diese durchsetzen. Beispielsweise können die Filtermaterialpartikel 6 zumindest zu 50 %, vorzugsweise zu 70 % und insbesondere zu 100 % eindringen und sich ablagern.

Es versteht sich, dass gemäß anderen Varianten der Erfindung das Filtermaterial 6 bereits der Fasersuspension 22 beigemengt sein kann.

Die zumindest mit Filtermaterial 6 durchsetzte Faserschicht 4.1 kann in einem weiteren Schritt 603 mit einer weiteren Faserschicht 4.2 und einer zusätzlichen Schutzschicht 10 verbunden werden. Insbesondere können mittels einer Presseinrichtung 32 die Schichten 4.1, 4.2 und 10 miteinander verbunden werden. Da das Verbinden der Schichten 4.1, 4.2 und 10 in der Nassphase 34 erfolgt, kann das Filtermaterial 6 zumindest teilweise auch die weitere Faserschicht 4.2 durchsetzen. Das Verbinden der Schichten 4.1, 4.2 und 10 kann auch sequentiell in mehreren Teilschritten erfolgen.

Es versteht sich, dass weitere Schichten in der Nassphase gebildet und mit dem Schichtverbund in entsprechender Weise verbunden werden können. Beispielsweise kann auf die weitere Faserschicht 4.2 erneut ein mit Filtermaterial versetztes Bindemittel aufgebracht werden. Auf die weitere Faserschicht 4.2 kann dann eine noch weitere Faserschicht aufgebracht werden. Nachdem eine Mehrzahl an Faserschichten aufgebracht und vorzugsweise jeweils mit einem Filtermaterial durchsetzt ist, kann eine obere Deckschicht aufgebracht werden.

In einem letzten Schritt 604 kann das hergestellte Fasererzeugnis 2 in einer Trockenphase getrocknet werden. Es versteht sich, das weitere Bearbeitungsschritte, wie ein Zuschneiden des Fasererzeugnisses, ein Bedrucken des Fasererzeugnisses, etc., durchgeführt werden können.

## Patentansprüche

1. Fasererzeugnis (2, 2.1, 2.2, 2.3) für Verpackungen, insbesondere Lebensmittelverpackungen, mit mindestens einer ersten Faserschicht (4.1, 4.1', 4.1", 4.2, 4.2', 4.2", 4.3", 4.4", 4.5", 4.6", 14, 16, 18), wobei die erste Faserschicht (4.1, 4.1', 4.1", 4.2, 4.2', 4.2", 4.3", 4.4", 4.5", 4.6", 14, 16, 18) Altpapierfasern (8) und/oder Zellulosefasern (8) aufweist, und das Fasererzeugnis Karton, Pappe und/oder Papier ist,
**dadurch gekennzeichnet, dass**
die erste Faserschicht (4.1, 4.1', 4.1", 4.2, 4.2', 4.2", 4.3", 4.4", 4.5", 4.6", 14, 16, 18) zumindest teilweise mit einem Filtermaterial (6) zum Binden von Mineralölstoffen derart durchsetzt ist, dass das Fasererzeugnis (2, 2.1, 2.2, 2.3) einen Migrationswert von zumindest kleiner als 0,6 mg/kg aufweist,
das Filtermaterial (6) eine Aktivkohle (6) in Partikelform ist, und
der durchschnittliche Durchmesser der Aktivkohlepartikel im Bereich zwischen 1 µm und 100 µm liegt.

2. Fasererzeugnis (2, 2.1, 2.2, 2.3) nach Anspruch 1, **dadurch gekennzeichnet, dass** die Aktivkohle (6) zumindest teilweise aus einem pflanzlichen Material, insbesondere aus Kokosnussschalen, gebildet ist.

3. Fasererzeugnis (2, 2.1, 2.2, 2.3) nach einem der vorherigen Ansprüche, **dadurch gekennzeichnet, dass** mindestens eine weitere mit der ersten Faserschicht (4.1, 4.1', 4.1", 4.2, 4.2', 4.2", 4.3", 4.4", 4.5", 4.6", 14, 16, 18) verbundene Schicht (4.1, 4.1', 4.1", 4.2, 4.2', 4.2", 4.3", 4.4", 4.5", 4.6", 10, 12, 14, 16, 18) vorgesehen ist.

4. Fasererzeugnis (2, 2.1, 2.2, 2.3) nach Anspruch 3, **dadurch gekennzeichnet, dass**
- die weitere Schicht (4.1, 4.1', 4.1", 4.2, 4.2', 4.2", 4.3", 4.4", 4.5", 4.6", 14,16, 18) eine weitere Faserschicht (4.1, 4.1', 4.1", 4.2, 4.2', 4.2", 4.3", 4.4", 4.5", 4.6", 14, 16, 18) ist, oder
- die weitere Schicht (10, 12) eine Schutzschicht (10, 12) ist.

5. Fasererzeugnis (2, 2.1, 2.2, 2.3) nach Anspruch 4, **dadurch gekennzeichnet, dass**
- mindestens eine Deckschicht (10, 12) des Fasererzeugnisses (2, 2.1, 2.2, 2.3) eine Schutzschicht (10, 12) ist, und/oder
- mindestens eine Innenschicht (4.1", 4.2", 4.3", 4.4", 4.5", 4.6") des Fasererzeugnisses (2, 2.1, 2.2, 2.3) eine Faserschicht (4.1", 4.2", 4.3", 4.4", 4.5", 4.6") ist.

6. Verfahren zum Herstellen eines Fasererzeugnisses (2, 2.1, 2.2, 2.3) nach einem der vorherigen Ansprüche, umfassend:
- Erzeugen mindestens einer ersten Faserschicht (4.1, 4.1', 4.1", 4.2, 4.2', 4.2", 4.3", 4.4", 4.5", 4.6", 14, 16, 18) aus einer Fasersuspension (22), wobei die erste Faserschicht (4.1, 4.1', 4.1", 4.2, 4.2', 4.2", 4.3", 4.4", 4.5", 4.6", 14, 16, 18) Altpapierfasern (8) und/oder Zellulosefasern (8) aufweist und das Fasererzeugnis Karton, Pappe und/oder Papier ist, und
- Hinzufügen eines Filtermaterials (6) zum Binden von Mineralölstoffen, derart, dass die erste Faserschicht (4.1, 4.1', 4.1", 4.2, 4.2', 4.2", 4.3", 4.4", 4.5", 4.6", 14, 16, 18) zumindest teilweise von dem Filtermaterial (6) durchsetzt wird.

7. Verfahren nach Anspruch 6, **dadurch gekennzeichnet, dass**
- das Filtermaterial (6) der Fasersuspension (22) hinzugefügt wird, und/oder
- das Filtermaterial (6) auf die erzeugte erste Faserschicht (4.1, 4.1', 4.1", 4.2, 4.2', 4.2", 4.3", 4.4", 4.5", 4.6", 14, 16, 18) aufgebracht wird.

8. Verfahren nach Anspruch 7, **dadurch gekennzeichnet, dass** Bindemittel (30) auf die erzeugte erste Faserschicht (4.1, 4.1', 4.1", 4.2, 4.2', 4.2", 4.3", 4.4", 4.5", 4.6", 14, 16, 18) aufgebracht, insbesondere aufgesprüht wird, wobei das Bindemittel (30) das Filtermaterial (6) umfasst.

9. Verfahren nach Anspruch 8, **dadurch gekennzeichnet, dass**
- das Bindemittel (30) Stärke umfasst.

10. Verfahren nach Anspruch 8 oder 9, **dadurch gekennzeichnet, dass** auf die mit dem Bindemittel (30) versehene erste Faserschicht (4.1, 4.1', 4.1", 4.2, 4.2', 4.2", 4.3", 4.4", 4.5", 4.6", 14, 16, 18) mindestens eine weitere Schicht (4.1, 4.1', 4.1", 4.2, 4.2', 4.2", 4.3", 4.4", 4.5", 4.6", 10, 12, 14, 16, 18) aufgebracht wird, wobei die erste Faserschicht (4.1, 4.1', 4.1", 4.2, 4.2', 4.2", 4.3", 4.4", 4.5", 4.6", 14,16,18) mit der weiteren Schicht (4.1, 4.1', 4.1", 4.2, 4.2', 4.2", 4.3", 4.4", 4.5", 4.6", 10, 12, 14, 16, 18) verpresst wird.

11. Vorrichtung (38) zum Herstellen eines Fasererzeugnisses (2, 2.1, 2.2, 2.3) nach einem der Ansprüche 1 bis 5,
**dadurch gekennzeichnet, dass**
- eine erste Zuführeinrichtung (20) zum Aufbringen einer Fasersuspension (22) auf eine Entwässerungseinrichtung (24) vorgesehen ist, wobei die Entwässerungseinrichtung (24) zum Erzeugen einer ersten Faserschicht (4.1, 4.1', 4.1", 4.2, 4.2', 4.2", 4.3", 4.4", 4.5", 4.6", 14, 16, 18) vorgesehen ist, wobei die erste Faserschicht (4.1, 4.1', 4.1", 4.2, 4.2', 4.2", 4.3", 4.4", 4.5", 4.6", 14, 16, 18) Altpapierfasern (8) und/oder Zellulosefasern (8) aufweist und das Fasererzeugnis Karton, Pappe und/oder Papier ist, und
- mindestens eine weitere Zuführeinrichtung (28) zum Aufbringen von zumindest einem Filtermaterial (6) auf die erzeugte erste Faserschicht (4.1, 4.1', 4.1", 4.2, 4.2', 4.2", 4.3", 4.4", 4.5", 4.6", 14, 16, 18) vorgesehen ist, derart, dass die erste Faserschicht (4.1, 4.1', 4.1", 4.2, 4.2', 4.2", 4.3", 4.4", 4.5", 4.6", 14,16,18) von dem Filtermaterial (6) zumindest teilweise durchsetzt wird.

12. Vorrichtung nach Anspruch 11, **dadurch gekennzeichnet, dass** mindestens eine Presseinrichtung (32) zum Verbinden von mindestens einer weiteren Schicht (4.1, 4.1', 4.1", 4.2, 4.2', 4.2", 4.3", 4.4", 4.5", 4.6", 10, 12, 14, 16, 18) mit der ersten Faserschicht (4.1, 4.1', 4.1", 4.2, 4.2', 4.2", 4.3", 4.4", 4.5", 4.6", 14, 16, 18) vorgesehen ist.

13. Lebensmittelverpackung umfassend ein Fasererzeugnis (2, 2.1, 2.2, 2.3) nach einem der Ansprüche 1 bis 5.

14. Verwendung eines Filtermaterials (6) in einem Fasererzeugnis (2, 2.1, 2.2, 2.3) zur Reduzierung der Migration von Mineralölstoffen aus dem Fasererzeugnis (2, 2.1, 2.2, 2.3) in ein weiteres Produkt auf einen Migrationswert zumindest kleiner als 0,6 mg/kg, wobei das Fasererzeugnis Karton, Pappe und/oder Papier ist, wobei das Filtermaterial (6) eine Aktivkohle (6) in Partikelform ist, und wobei der durchschnittliche Durchmesser der Aktivkohlepartikel im Bereich zwischen 1 µm und 100 µm liegt.

15. Verwendung nach Anspruch 14, **dadurch gekennzeichnet, dass** zur Reduzierung der Migration von Mineralölstoffen aus dem Fasererzeugnis (2, 2.1, 2.2, 2.3) in ein weiteres Produkt auf einen Migrationswert zumindest kleiner als 0,6 mg/kg das Fasererzeugnis (2, 2.1, 2.2, 2.3) mindestens eine erste Faserschicht umfasst, die zumindest teilweise mit dem Filtermaterial (6) zum Binden von Mineralölstoffen benachbart angeordnet ist.

## Claims

1. Fibre product (2, 2.1, 2.2, 2.3) for packagings, in particular foodstuff packagings, comprising at least one first fibre layer (4.1, 4.1', 4.1", 4.2, 4.2', 4.2", 4.3", 4.4", 4.5", 4.6", 14,16,18), wherein the first fibre layer (4.1, 4.1', 4.1", 4.2, 4.2', 4.2", 4.3", 4.4", 4.5", 4.6", 14, 16, 18) comprises waste paper fibres (8) and/or cellulose fibres (8) and the fibre product is card, board and/or paper,
**characterised in that**
the first fibre layer (4.1, 4.1', 4.1", 4.2, 4.2', 4.2", 4.3", 4.4", 4.5", 4.6", 14, 16, 18) is at least partially interspersed with a filter material (6) for binding mineral oil substances in such a manner that the fibre product (2, 2.1, 2.2, 2.3) has a migration value of at least less than 0.6 mg/kg,
the filter material (6) is an activated charcoal (6), and
the average diameter of the activated carbon particles is in the range between 1 µm and 100 µm.

2. The fibre product (2, 2.1, 2.2, 2.3) according to claim 1, **characterised in that** the activated charcoal (6) is at least partially formed from a vegetable material, in particular from coconut husks.

3. The fibre product (2, 2.1, 2.2, 2.3) according to any one of the preceding claims, **characterised in that** at least one further layer (4.1, 4.1', 4.1", 4.2, 4.2', 4.2", 4.3", 4.4", 4.5", 4.6", 10, 12, 14, 16, 18) connected to the first fibre layer (4.1, 4.1', 4.1", 4.2, 4.2', 4.2", 4.3", 4.4", 4.5", 4.6", 14, 16, 18) is provided.

4. The fibre product (2, 2.1, 2.2, 2.3) according to claim 3, **characterised in that**
- the further layer (4.1, 4.1', 4.1", 4.2, 4.2', 4.2", 4.3", 4.4", 4.5", 4.6", 14,16, 18) is another fibre layer (4.1, 4.1', 4.1", 4.2, 4.2', 4.2", 4.3", 4.4", 4.5", 4.6", 14, 16, 18) or
- the further layer (10, 12) is a protective layer (10, 12).

5. The fibre product (2, 2.1, 2.2, 2.3) according to claim 4, **characterised in that**
- at least one cover layer (10, 12) of the fibre product (2, 2.1, 2.2, 2.3) is a protective layer (10, 12)
and/or
- at least one inner layer (4.1", 4.2", 4.3", 4.4", 4.5", 4.6") of the fibre product (2, 2.1, 2.2, 2.3) is a fibre layer (4.1", 4.2", 4.3", 4.4", 4.5", 4.6").

6. Method for producing a fibre product (2, 2.1, 2.2, 2.3) according to any one of the preceding claims, comprising:
- producing at least one first fibre layer (4.1, 4.1', 4.1", 4.2, 4.2', 4.2", 4.3", 4.4", 4.5", 4.6", 14, 16, 18) from a fibre suspension (22), wherein the first fibre layer (4.1, 4.1', 4.1", 4.2, 4.2', 4.2", 4.3", 4.4", 4.5", 4.6", 14, 16, 18) comprises waste paper fibres (8) and/or cellulose fibres (8) and the fibre product is card, board and/or paper, and
- adding a filter material (6) for binding material substances in such a manner that the first fibre layer (4.1, 4.1', 4.1", 4.2, 4.2', 4.2", 4.3", 4.4", 4.5", 4.6", 14, 16, 18) is interspersed at least in part with the filter material (6).

7. The method according to claim 6, **characterised in that**
- the filter material (6) is added to the fibre suspension (22) and/or
- the filter material (6) is applied to the first fibre layer (4.1, 4.1', 4.1", 4.2, 4.2', 4.2", 4.3", 4.4", 4.5", 4.6", 14, 16, 18) produced.

8. The method according to claim 7, **characterised in that** binder (30) is applied to the first fibre layer (4.1, 4.1', 4.1", 4.2, 4.2', 4.2", 4.3", 4.4", 4.5", 4.6", 14, 16, 18) produced, in particular sprayed therein, wherein the binder (30) comprises the filter material (6).

9. The method according to claim 8, **characterised in that**
- the binder (30) comprises starch.

10. The method according to claim 8 or 9, **characterised in that** at least one further layer (4.1, 4.1', 4.1", 4.2, 4.2', 4.2", 4.3", 4.4", 4.5", 4.6", 10, 12, 14, 16, 18) is applied to the first fibre layer (4.1, 4.1', 4.1", 4.2, 4.2', 4.2", 4.3", 4.4", 4.5", 4.6", 14, 16, 18) provided with the binder (30), wherein the first fibre layer (4.1, 4.1', 4.1", 4.2, 4.2', 4.2", 4.3", 4.4", 4.5", 4.6", 14, 16, 18) is pressed with the further layer (4.1, 4.1', 4.1", 4.2, 4.2', 4.2", 4.3", 4.4", 4.5", 4.6", 10, 12, 14, 16, 18).

11. Apparatus (38) for producing a fibre product (2, 2.1, 2.2, 2.3) according to any one of claims 1 to 6,
**characterised in that**
- a first feed device (20) is provided for applying a fibre suspension (22) to a dewatering device (24), wherein the dewatering device (24) is provided for producing a first fibre layer (4.1, 4.1', 4.1", 4.2, 4.2', 4.2", 4.3", 4.4", 4.5", 4.6", 14, 16, 18), wherein the first fibre layer (4.1, 4.1', 4.1", 4.2, 4.2', 4.2", 4.3", 4.4", 4.5", 4.6", 14, 16, 18) comprises waste paper fibres (8) and/or cellulose fibres (8) and the fibre product is card, board and/or paper, and
- at least one further feed device (28) is provided for applying at least one filter material (6) to the first fibre layer (4.1, 4.1', 4.1", 4.2, 4.2', 4.2", 4.3", 4.4", 4.5", 4.6", 14, 16, 18) produced in such a manner that the first fibre layer (4.1, 4.1', 4.1", 4.2, 4.2', 4.2", 4.3", 4.4", 4.5", 4.6", 14, 16, 18) is at least partially interspersed with the filter material (6).

12. The apparatus according to claim 11, **characterised in that** at least one pressing device (32) is provided for joining at least one further layer (4.1, 4.1', 4.1", 4.2, 4.2', 4.2", 4.3", 4.4", 4.5", 4.6", 10, 12, 14, 16, 18) to the first fibre layer (4.1, 4.1', 4.1", 4.2, 4.2', 4.2", 4.3", 4.4", 4.5", 4.6", 14,16,18).

13. Foodstuff packaging comprising a fibre product (2, 2.1, 2.2, 2.3) according to any one of claims 1 to 5.

14. Use of a filter material (6) in a fibre product (2, 2.1, 2.2, 2.3) for reducing the migration of mineral oil substances from the fibre product (2, 2.1, 2.2, 2.3) into another product to a migration value of at least less than 0.6 mg/kg, wherein the fibre product is card, board and/or paper, wherein the filter material (6) is an activated charcoal (6), and wherein the average diameter of the activated carbon particles is in the range between 1 µm and 100 µm.

15. Use according to claim 14, **characterized in that** the fibre product (2, 2.1, 2.2, 2.3) comprises at least one first fibre layer at least partially interspersed with the filter material (6) for binding mineral oils, for reducing the migration of mineral oil substances from the fibre product (2, 2.1, 2.2, 2.3) into another product to a migration value of at least less than 0.6 mg/kg.

## Revendications

1. Produit fibreux (2, 2.1, 2.2, 2.3) conçu pour des emballages, en particulier des emballages pour des produits alimentaires, ledit produit fibreux comprenant au moins une première couche de fibres (4.1, 4.1', 4.1", 4.2, 4.2', 4.2", 4.3", 4.4", 4.5", 4.6", 14, 16, 18), où la première couche de fibres (4.1, 4.1', 4.1", 4.2, 4.2', 4.2", 4.3", 4.4", 4.5", 4.6", 14, 16, 18) présente des fibres de vieux papiers (8) et/ou des fibres de cellulose (8), et le produit fibreux est du carton, du carton-pâte et/ou du papier,
**caractérisé**
**en ce que** la première couche de fibres (4.1, 4.1', 4.1", 4.2, 4.2', 4.2", 4.3", 4.4", 4.5", 4.6", 14, 16, 18) est mélangée au moins en partie avec un matériau filtrant (6) servant à combiner des matières à base d'huiles minérales, de manière telle que le produit fibreux (2, 2.1, 2.2, 2.3) présente une valeur de migration au moins inférieure à 0,6 mg/kg, le matériau filtrant (6) est un charbon actif (6) se présentant sous la forme de particules, et le diamètre moyen de la particule de charbon actif se situe dans la plage comprise entre 1 µm et 100 µm.

2. Produit fibreux (2, 2.1, 2.2, 2.3) selon la revendication 1, **caractérisé en ce que** le charbon actif (6) est formé en se composant, au moins en partie, d'un matériau végétal, se composant en particulier de coques de noix de coco.

3. Produit fibreux (2, 2.1, 2.2, 2.3) selon l'une des revendications précédentes, **caractérisé en ce qu'**il est prévu au moins une autre couche (4.1, 4.1', 4.1", 4.2, 4.2', 4.2", 4.3", 4.4", 4.5", 4.6", 10, 12, 14, 16, 18) combinée avec la première couche de fibres (4.1, 4.1', 4.1", 4.2, 4.2', 4.2", 4.3", 4.4", 4.5", 4.6", 14,16, 18).

4. Produit fibreux (2, 2.1, 2.2, 2.3) selon la revendication 3,
**caractérisé**
- **en ce que** l'autre couche (4.1, 4.1', 4.1", 4.2, 4.2', 4.2", 4.3", 4.4", 4.5", 4.6", 14, 16, 18) est une autre couche de fibres (4.1, 4.1', 4.1", 4.2, 4.2', 4.2", 4.3", 4.4", 4.5", 4.6", 14,16,18), ou bien
- l'autre couche (10, 12) est une couche de protection (10, 12).

5. Produit fibreux (2, 2.1, 2.2, 2.3) selon la revendication 4,
**caractérisé**
- **en ce qu'**au moins une couche de recouvrement (10, 12) du produit fibreux (2, 2.1, 2.2, 2.3) est une couche de protection (10, 12), et/ou
- **en ce qu'**au moins une couche intérieure (4.1", 4.2", 4.3", 4.4", 4.5", 4.6") du produit fibreux (2, 2.1, 2.2, 2.3) est une couche de fibres (4.1", 4.2", 4.3", 4.4", 4.5", 4.6").

6. Procédé de fabrication d'un produit fibreux (2, 2.1, 2.2, 2.3) selon l'une quelconque des revendications précédentes, ledit procédé consistant :
- à produire au moins une première couche de fibres (4.1, 4.1', 4.1", 4.2, 4.2', 4.2", 4.3", 4.4", 4.5", 4.6", 14, 16, 18) à partir d'une suspension de fibres (22), où la première couche de fibres (4.1, 4.1', 4.1", 4.2, 4.2', 4.2", 4.3", 4.4", 4.5", 4.6", 14, 16, 18) présente des fibres de vieux papiers (8) et/ou des fibres de cellulose (8), et le produit fibreux est du carton, du carton-pâte et/ou du papier, et
- à ajouter un matériau filtrant (6) servant à combiner des matières à base d'huiles minérales, de manière telle que la première couche de fibres (4.1, 4.1', 4.1", 4.2, 4.2', 4.2", 4.3", 4.4", 4.5", 4.6", 14, 16, 18) soit traversée au moins en partie par le matériau filtrant (6).

7. Procédé selon la revendication 6,
**caractérisé**
- **en ce que** le matériau filtrant (6) est ajouté à la suspension de fibres (22), et/ou
- **en ce que** le matériau filtrant (6) est appliqué sur la première couche de fibres (4.1, 4.1', 4.1", 4.2, 4.2', 4.2", 4.3", 4.4", 4.5", 4.6", 14, 16, 18) ayant été produite.

8. Procédé selon la revendication 7, **caractérisé en ce qu'**un liant (30) est appliqué, en particulier pulvérisé sur la première couche de fibres (4.1, 4.1', 4.1", 4.2, 4.2', 4.2", 4.3", 4.4", 4.5", 4.6", 14, 16, 18) ayant été produite, où le liant (30) contient le matériau filtrant (6).

9. Procédé selon la revendication 8,
**caractérisé**
- **en ce que** le liant (30) contient de l'amidon.

10. Procédé selon la revendication 8 ou 9, **caractérisé en ce qu'**au moins une autre couche (4.1, 4.1', 4.1", 4.2, 4.2', 4.2", 4.3", 4.4", 4.5", 4.6", 10, 12, 14, 16, 18) est appliquée sur la première couche de fibres (4.1, 4.1', 4.1", 4.2, 4.2', 4.2", 4.3", 4.4", 4.5", 4.6", 14, 16, 18) dotée du liant (30), où la première couche de fibres (4.1, 4.1', 4.1", 4.2, 4.2', 4.2", 4.3", 4.4", 4.5", 4.6", 14, 16, 18) est comprimée avec l'autre couche (4.1, 4.1', 4.1", 4.2, 4.2', 4.2", 4.3", 4.4", 4.5", 4.6", 10, 12, 14, 16, 18).

11. Dispositif (38) servant à la fabrication d'un produit fibreux (2, 2.1, 2.2, 2.3) selon l'une quelconque des revendications 1 à 5,
**caractérisé**
- **en ce qu'**il est prévu un premier dispositif d'alimentation (20) servant à l'application d'une suspension de fibres (22) sur un dispositif de déshydratation (24), où le dispositif de déshydratation (24) est prévu pour la production d'une première couche de fibres (4.1, 4.1', 4.1", 4.2, 4.2', 4.2", 4.3", 4.4", 4.5", 4.6", 14, 16, 18), où la première couche de fibres (4.1, 4.1', 4.1", 4.2, 4.2', 4.2", 4.3", 4.4", 4.5", 4.6", 14, 16, 18) présente des fibres de vieux papiers (8) et/ou des fibres de cellulose (8), et le produit fibreux est du carton, du carton-pâte et/ou du papier, et
- **en ce qu'**il est prévu au moins un autre dispositif d'alimentation (28) servant à l'application d'au moins un matériau filtrant (6) sur la première couche de fibres (4.1, 4.1', 4.1", 4.2, 4.2', 4.2", 4.3", 4.4", 4.5", 4.6", 14, 16, 18) ayant été produite, de manière telle que la première couche de fibres (4.1, 4.1', 4.1", 4.2, 4.2', 4.2", 4.3", 4.4", 4.5", 4.6", 14, 16, 18) soit traversée au moins en partie par le matériau filtrant (6).

12. Dispositif selon la revendication 11, **caractérisé en ce qu'**il est prévu au moins un dispositif de compression (32) servant à la combinaison d'au moins une autre couche (4.1, 4.1', 4.1", 4.2, 4.2', 4.2", 4.3", 4.4", 4.5", 4.6", 10, 12, 14, 16, 18) avec la première couche de fibres (4.1, 4.1', 4.1", 4.2, 4.2', 4.2", 4.3", 4.4", 4.5", 4.6", 14, 16, 18).

13. Emballage pour des produits alimentaires, ledit emballage comprenant un produit fibreux (2, 2.1, 2.2, 2.3) selon l'une quelconque des revendications 1 à 5.

14. Utilisation d'un matériau filtrant (6) dans un produit fibreux (2, 2.1, 2.2, 2.3), ledit matériau filtrant permettant la réduction de la migration de matières à base d'huiles minérales provenant du produit fibreux (2, 2.1, 2.2, 2.3) et passant dans un autre produit, ladite migration étant réduite à une valeur de migration au moins inférieure à 0,6 mg/kg, où le produit fibreux est du carton, du carton-pâte et/ou du papier, où le matériau filtrant (6) est un charbon actif (6) se présentant sous la forme de particules, et où le diamètre moyen de la particule de charbon actif se situe dans la plage comprise entre 1 µm et 100 µm.

15. Utilisation selon la revendication 14, **caractérisée en ce que** le produit fibreux (2, 2.1, 2.2, 2.3) comprend au moins une première couche de fibres au moins partiellement intercalée avec le matériau filtrant (6) pour lier les huiles minérales, pour réduire la migration des substances huileuses minérales du produit fibreux (2, 2.1, 2.2, 2.3) vers un autre produit à une valeur de migration inférieure à 0,6 mg/kg.
